# EUROPEAN PATENT SPECIFICATION

(11) **EP 3 335 111 B1**
(45) Date of publication and mention of the grant of the patent: **21.08.2019**
(21) Application number: 16745934.6
(22) Date of filing: 14.07.2016
(51) Int. Cl.: G06F 9/38

(54) **PREDICTING MEMORY INSTRUCTION PUNTS IN A COMPUTER PROCESSOR USING A PUNT AVOIDANCE TABLE (PAT)**
VORHERSAGE VON SPEICHERANWEISUNGSPUNTS IN EINEM COMPUTERPROZESSOR MITHILFE EINER PUNT-VERMEIDUNGSTABELLE (PAT)
PRÉDICTION DE DÉGAGEMENTS D'INSTRUCTION DE MÉMOIRE DE PROCESSEUR D'ORDINATEUR AU MOYEN D'UNE TABLE D'ÉVITEMENT DE DÉGAGEMENT (PAT)

(30) Priority: 14.08.2015 US 201562205400 P; 24.09.2015 US 201514863612
(43) Date of publication of application: 20.06.2018
(73) Proprietor: Qualcomm Incorporated, San Diego, CA 92121-1714 (US)
(72) Inventor: YEN, Luke, San Diego, California 92121 (US); MORROW, Michael, William, San Diego, California 92121 (US); SCHOTTMILLER, Jeffery, Michael, San Diego, California 92121 (US); DIEFFENDERFER, James, Norris, San Diego, California 92121 (US)
(74) Representative: Tomkins & Co
(86) International application number: PCT/US2016/042234
(87) International publication number: WO 2017/030691

(56) References cited:
- US-A- 5 958 041
- US-A1- 2010 205 384
- US-A1- 2013 318 330
- US-A1- 2015 160 945

## Description

### PRIORITY CLAIM

The present application claims priority to U.S. Provisional Patent Application Serial No. 62/205,400 filed on August 14, 2015 and entitled "PREDICTING MEMORY INSTRUCTION PUNTS IN A COMPUTER PROCESSOR USING A PUNT AVOIDANCE TABLE (PAT)".

The present application also claims priority to U.S. Patent Application Serial No. 14/863,612 filed on September 24, 2015 and entitled "PREDICTING MEMORY INSTRUCTION PUNTS IN A COMPUTER PROCESSOR USING A PUNT AVOIDANCE TABLE (PAT)".

### BACKGROUND

### I. Field of the Disclosure

The technology of the disclosure relates generally to processing memory instructions in an out-of-order (OOO) computer processor, and, in particular, to avoiding re-fetching and re-executing instructions due to hazards.

### II. Background

Out-of-order (OOO) processors are computer processors that are capable of executing computer program instructions in an order determined by an availability of each instruction's input operands, regardless of the order of appearance of the instructions in a computer program. By executing instructions out-of-order, an OOO processor may be able to fully utilize processor clock cycles that would otherwise be wasted while the OOO processor waits for data access operations to complete. For example, instead of having to "stall" (i.e., intentionally introduce a processing delay) while input data is retrieved for an older program instruction, the OOO processor may proceed with executing a more recently fetched instruction that is able to execute immediately. In this manner, processor clock cycles may be more productively utilized by the OOO processor, resulting in an increase in the number of instructions that the OOO processor is capable of processing per processor clock cycle.

However, out-of-order execution of memory instructions may result in the occurrence of "punts." Punts are circumstances in which one or more memory instructions must be re-fetched and re-executed due to a detected hazard. For example, a punt may result from an occurrence of a read-after-write (RAW) hazard, a read-after-read (RAR) hazard, and/or a resource constraint hazard such as a lack of available load queue entries or store queue entries, as non-limiting examples. Re-fetching and re-execution of memory instructions may reduce processor performance and result in greater power consumption.

US 2013318330 A1 discloses a method and information processing system which manage load and store operations that can be executed out-of-order. At least one of a load instruction and a store instruction is executed. A determination is made that an operand store compare hazard has been encountered. An entry within an operand store compare hazard prediction table is created based on the determination. The entry includes at least an instruction address of the instruction that has been executed and a hazard indicating flag associated with the instruction. The hazard indicating flag indicates that the instruction has encountered the operand store compare hazard. When a load instruction is associated with the hazard indicating flag, the load instruction becomes dependent upon all store instructions associated with a substantially similar hazard indicating flag.

US5958041 A discloses a latency prediction bit (LPB) which indicates the latency with which an instruction should be executed, implicitly indicating whether a data dependency is likely to exist and the likelihood of that dependency causing a hazard. The document discloses an instruction dependent upon a given LDI instruction is issued a given number of machine cycles after that LDI instruction, the number of machine cycles being based on the value of the LPB associated with that LDI instruction. The LPB's value, in turn, depends on whether data will need to be forwarded to the functional unit involved during the execution of LDI instruction.

US2010205384 A1 discloses a processor which implements a store hit load predictor. The store hit load predictor is configured to monitor fetched ops in the processor, and is configured to detect stores that may have previously caused store hit load events. The store hit load predictor is configured to predict that the store will cause a store hit load event again, and is further configured to monitor subsequent fetched ops for the load. The store hit load predictor may locate the load using, e.g., an offset from the store to the load in the code sequence. In response to locating the load, the store hit load predictor may create a dependency of the load on the store, preventing the load from executing out of order with respect to the store. A store hit load event may be avoided in this fashion, at least in some cases.

US2015160945 A1 discloses a system which includes a prediction component and an execution component. The prediction component predicts whether a load instruction in the system is associated with an instruction pipeline hazard. The execution component allocates the load instruction to a queue buffer in the system in response to a prediction that the load instruction is not associated with the instruction pipeline hazard.

### SUMMARY OF THE DISCLOSURE

Aspects disclosed in the detailed description include predicting memory instruction punts in a computer processor using a punt avoidance table (PAT). In this regard, in one aspect, an instruction processing circuit in a computer processor accesses a PAT for predicting and preempting memory instruction punts. As used herein, a "punt" refers to a process of re-fetching and re-executing a memory instruction and one or more older memory instructions in a computer processor, in response to a hazard condition arising from out-of-order execution of the memory instruction. The PAT contains one or more entries, each comprising an address of a memory instruction that was previously executed out-of-order and that resulted in a memory instruction punt. During execution of a computer program, an instruction processing circuit detects a memory instruction in an instruction stream, and determines whether the PAT contains an entry having an address corresponding to the memory instruction. If the PAT contains an entry having an address corresponding to the memory instruction, the instruction processing circuit may preempt a punt by preventing the detected memory instruction from taking effect before at least one pending memory instruction older than the detected memory instruction. As non-limiting examples, the instruction processing circuit in some aspects may perform an in-order dispatch of the at least one pending memory instruction older than the detected memory instruction, or may prevent an early return of data by the detected memory instruction until the at least one pending memory instruction older than the detected memory instruction has completed. In this manner, the instruction processing circuit may reduce the occurrence of memory instruction punts, thus providing improved processor performance.

Further, in some exemplary aspects in which the hazard encountered by the instruction processing circuit is a read-after-write (RAW) hazard, the instruction processing circuit may prevent the detected memory instruction from taking effect before any pending memory store instructions older than the detected memory instruction. As another exemplary aspect, when the hazard encountered by the instruction processing circuit is a read-after-read (RAR) hazard, the instruction processing circuit may prevent the detected memory instruction from taking effect before any pending memory load instructions older than the detected memory instruction. For aspects in which the hazard is a resource constraint hazard, the instruction processing circuit may prevent the detected memory instruction from taking effect before any pending memory instructions older than the detected memory instruction.

In another aspect, an instruction processing circuit in an OOO computer processor is provided. The instruction processing circuit is communicatively coupled to a front-end circuit of an execution pipeline, and comprises a PAT providing a plurality of entries. The instruction processing circuit is configured to prevent a detected memory instruction from taking effect before at least one pending memory instruction older than the detected memory instruction to preempt a memory instruction punt, responsive to determining that an address of the detected memory instruction is present in an entry of the plurality of entries of the PAT.

In another aspect, an instruction processing circuit is provided in an OOO computer processor. The instruction processing circuit comprises a means for providing a plurality of entries in a PAT. The instruction processing circuit also comprises a means for preventing a detected memory instruction from taking effect before at least one pending memory instruction older than the detected memory instruction to preempt a memory instruction punt, responsive to determining that an address of the detected memory instruction is present in an entry of the plurality of entries of the PAT.

In another aspect, a method for predicting memory instruction punts is provided. The method comprises detecting, in an instruction stream, a memory instruction. The method further comprises determining whether an address of the detected memory instruction is present in an entry of a PAT. The method also comprises, responsive to determining that the address of the detected memory instruction is present in the entry, preventing the detected memory instruction from taking effect before at least one pending memory instruction older than the detected memory instruction, to preempt a memory instruction punt.

In another aspect, a non-transitory computer-readable medium is provided, having stored thereon computer-executable instructions, which when executed by a processor, cause the processor to detect, in an instruction stream, a memory instruction. The computer-executable instructions stored thereon further cause the processor to determine whether an address of the detected memory instruction is present in an entry of a PAT. The computer-executable instructions stored thereon also cause the processor to, responsive to determining that the address of the detected memory instruction is present in the entry, prevent the detected memory instruction from taking effect before at least one pending memory instruction older than the detected memory instruction, to preempt a memory instruction punt.

### BRIEF DESCRIPTION OF THE FIGURES

Figure 1 is a block diagram of an exemplary out-of-order (OOO) computer processor including an instruction processing circuit configured to predict memory instruction punts using a punt avoidance table (PAT);
Figure 2 is a block diagram illustrating entries of an exemplary PAT of the instruction processing circuit of Figure 1;
Figures 3A-3C illustrate exemplary communications flows of the instruction processing circuit in Figure 1 for establishing an entry in the PAT of Figure 1, and subsequently preempting a memory instruction punt in response to detecting a memory instruction;
Figures 4A-4C are flowcharts illustrating exemplary operations of the instruction processing circuit in Figure 1 of predicting memory instruction punts using the PAT of the instruction processing circuit; and
Figure 5 is a block diagram of an exemplary processor-based system that can include the instruction processing circuit of Figure 1 configured to predict memory instruction punts using a PAT.

### DETAILED DESCRIPTION

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

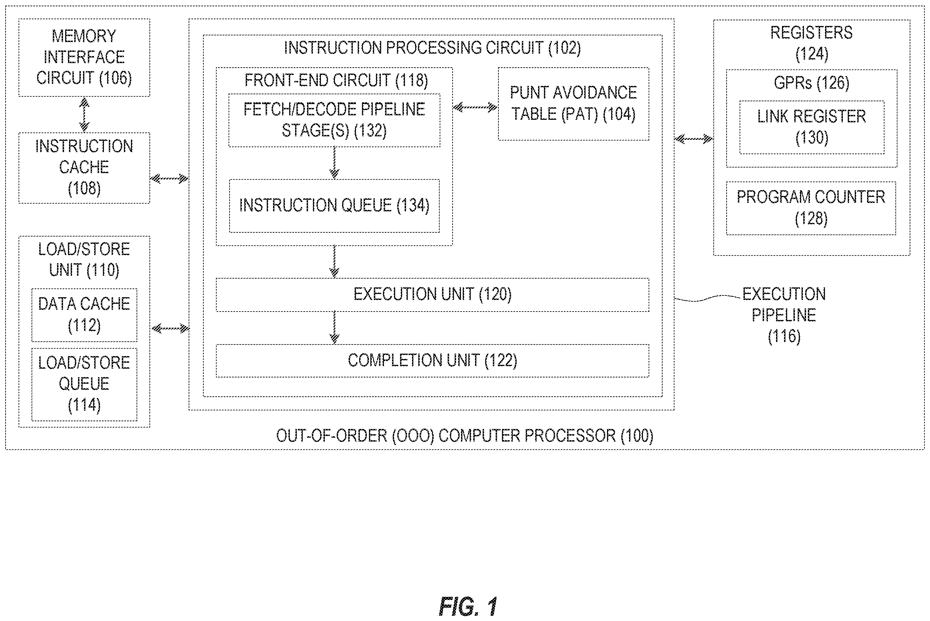

Aspects disclosed in the detailed description include predicting memory instruction punts in a computer processor using a punt avoidance table (PAT). In this regard, Figure 1 is a block diagram of an exemplary out-of-order (OOO) computer processor 100 providing out-of-order processing of instructions to increase instruction processing parallelism. As discussed in more detail below, the OOO computer processor 100 includes an instruction processing circuit 102 that accesses a PAT 104 for predicting memory instruction punts. The term "memory instruction" as used herein refers generally to memory load instructions and/or memory store instructions, as non-limiting examples. The OOO computer processor 100 may encompass any one of known digital logic elements, semiconductor circuits, processing cores, and/or memory structures, among other elements, or combinations thereof. Aspects described herein are not restricted to any particular arrangement of elements, and the disclosed techniques may be easily extended to various structures and layouts on semiconductor dies or packages.

The OOO computer processor 100 includes a memory interface circuit 106, an instruction cache 108, and a load/store unit 110 comprising a data cache 112 and a load/store queue 114. In some aspects, the data cache 112 may comprise an on-chip Level 1 (L1) data cache, as a non-limiting example. The OOO computer processor 100 further comprises an execution pipeline 116 that includes the instruction processing circuit 102. The instruction processing circuit 102 provides a front-end circuit 118, an execution unit 120, and a completion unit 122. The OOO computer processor 100 additionally includes registers 124, which comprise one or more general purpose registers (GPRs) 126, a program counter 128, and a link register 130. In some aspects, such as those employing the ARM® ARM7™ architecture, the link register 130 is one of the GPRs 126, as shown in Figure 1. Alternately, some aspects, such as those utilizing the IBM® PowerPC® architecture, may provide that the link register 130 is separate from the GPRs 126 (not shown).

In exemplary operation, the front-end circuit 118 of the execution pipeline 116 fetches instructions (not shown) from the instruction cache 108, which in some aspects may be an on-chip Level 1 (L1) cache, as a non-limiting example. The fetched instructions are decoded by the front-end circuit 118 and issued to the execution unit 120. The execution unit 120 executes the issued instructions, and the completion unit 122 retires the executed instructions. In some aspects, the completion unit 122 may comprise a write-back mechanism (not shown) that stores the execution results in one or more of the registers 124. It is to be understood that the execution unit 120 and/or the completion unit 122 may each comprise one or more sequential pipeline stages. In the example of Figure 1, the front-end circuit 118 comprises one or more fetch/decode pipeline stages 132, which enable multiple instructions to be fetched and decoded concurrently. An instruction queue 134 for holding the fetched instructions pending dispatch to the execution unit 120 is communicatively coupled to one or more of the fetch/decode pipeline stages 132.

While processing instructions in the execution pipeline 116, the instruction processing circuit 102 may execute memory instructions, such as memory load instructions and/or memory store instructions, in an order that is different from the program order in which the instructions are fetched. As a result, under some circumstances, the out-of-order execution of memory instructions may result in the occurrence of memory instruction "punts," in which a memory instruction and one or more older memory instructions must be re-fetched and re-executed due to a detected hazard. For example, a younger memory load instruction executed prior to an older memory store instruction to the same memory address may result in a RAW hazard, thereby requiring the memory load instruction and the memory store instruction to be re-fetched and re-executed. Similarly, a younger memory load instruction executed prior to an older memory load instruction to the same memory address may cause a RAR hazard to occur, necessitating the re-fetching and re-executing of both memory load instructions. In some aspects, younger memory load instructions may consume all of an available resource (e.g., load queue entries (not shown) or store queue entries (not shown), as non-limiting examples), preventing older memory instructions from executing, and thereby requiring all of the pending memory instructions to be re-fetched and re-executed. In each of these circumstances, the re-fetching and re-execution of memory instructions may negatively affect processor performance and may result in greater power consumption.

In this regard, the instruction processing circuit 102 of Figure 1 is includes the PAT 104 for predicting memory instruction punts. The instruction processing circuit 102 is configured to detect a memory instruction (not shown) in an instruction stream (not shown) being processed within the execution pipeline 116. As the memory instruction is fetched by the front-end circuit 118 of the instruction processing circuit 102, the instruction processing circuit 102 consults the PAT 104. The PAT 104 contains one or more entries (not shown). Each entry of the PAT 104 may include an address of a previously-detected memory instruction, the dispatch and execution of which resulted in a hazard and a subsequent memory instruction punt.

The instruction processing circuit 102 determines whether an address of the memory instruction being fetched is present in an entry of the PAT 104. If the address of the memory instruction is found in an entry of the PAT 104 (i.e., a "hit"), it may be concluded that a previous out-of-order execution of the memory instruction resulted in a punt, and may be likely to do so again. To preemptively preclude the possibility of a punt, the instruction processing circuit 102 prevents the detected memory instruction from taking effect (i.e., from being dispatched out-of-order and/or from providing an early return of data, as non-limiting examples) before the at least one pending memory instruction older than the detected memory instruction. As non-limiting examples, the instruction processing circuit 102 in some aspects may perform an in-order dispatch of the at least one pending memory instruction older than the detected memory instruction, or may prevent an early return of data by the detected memory instruction until the at least one pending memory instruction older than the detected memory instruction has completed. According to some aspects, the instruction processing circuit 102 may prevent the early return of data by the detected memory instruction by adding one or more attributes (not shown) to the detected memory instruction. These attributes may indicate that an early return of data (e.g., from the data cache 112) for the detected memory instruction is to be blocked, and that the detected memory instruction should instead wait for all older memory operation hazards to be resolved.

As noted above, different operations for preventing the detected memory instruction from taking effect before the at least one pending memory instruction older than the detected memory instruction may be applied to different types of memory instructions depending on a type of hazard that is associated with the entry of the PAT 104. As a non-limiting example, if a previous out-of-order execution of the memory instruction resulted in a RAW hazard, the instruction processing circuit 102 may prevent the detected memory instruction from taking effect before any pending memory store instructions older than the detected memory instruction. If a RAR hazard resulted from the previous out-of-order execution of the memory instruction, the instruction processing circuit 102 may prevent the detected memory instruction from taking effect before any pending memory load instructions older than the detected memory instruction. For aspects in which the hazard is a resource constraint hazard, the instruction processing circuit 102 may prevent the detected memory instruction from taking effect before any pending memory instructions older than the detected memory instruction.

According to some aspects disclosed herein, if the instruction processing circuit 102 detects a memory instruction but does not find the address of the memory instruction in an entry of the PAT 104, a "miss" occurs. In this case, the instruction processing circuit 102 may continue processing of the memory instruction. If a hazard associated with the detected memory instruction subsequently occurs upon execution of a pending memory instruction older than the memory instruction, an entry containing the address of the memory instruction may be generated in the PAT 104. The memory instruction and the pending memory instruction may then be re-fetched and re-executed.

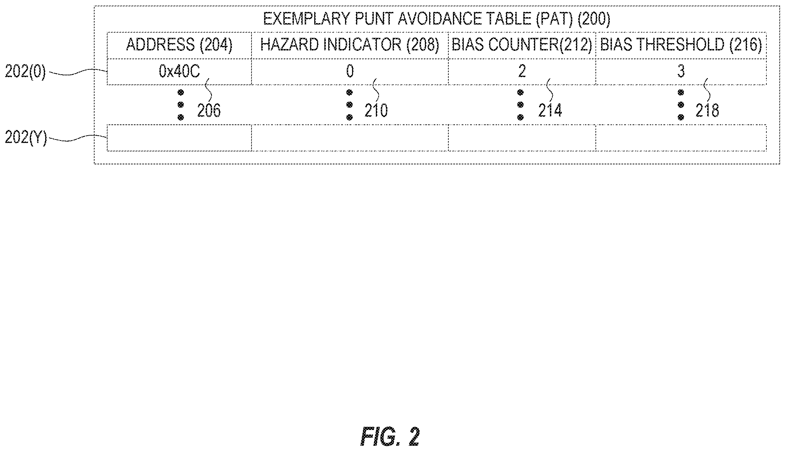

To illustrate an exemplary PAT 200 that may correspond to the PAT 104 of Figure 1 in some aspects, Figure 2 is provided. Elements of Figure 1 are referenced for the sake of clarity in describing Figure 2. As seen in Figure 2, the PAT 200 includes multiple entries 202(0)-202(Y), each of which may store data associated with a detected memory instruction (not shown). Each of the entries 202(0)-202(Y) includes an address field 204 for storing an address, such as an address 206, for the associated memory instruction. An entry such as the entry 202(0) may be generated by the instruction processing circuit 102 in response to an occurrence of a hazard resulting from an out-of-order execution of a memory instruction located at the address 206.

According to some aspects, each entry 202(0)-202(Y) of the PAT 200 may also include an optional hazard indicator field 208 for storing a hazard indicator such as a hazard indicator 210. The hazard indicator 210 in some aspects may comprise one or more bits that provide an indication of the type of hazard (e.g., a RAW hazard, a RAR hazard, or a resource constraint hazard, as non-limiting examples) corresponding to the associated memory instruction. The instruction processing circuit 102 may employ the hazard indicator 210 in determining the appropriate action to take to preempt a memory instruction punt. In some aspects of the PAT 200 that do not include the hazard indicator field 208, the PAT 200 may be dedicated to tracking a single type of hazard. For instance, the PAT 200 may be dedicated to tracking only RAW hazards, as a non-limiting example. Some aspects may provide that multiple PATs 200 are provided, each tracking a different hazard type.

Some aspects may also provide that each of the entries 202(0)-202(Y) of the PAT 200 further includes a bias counter field 212 storing a bias counter value 214. The entries 202(0)-202(Y) of the PAT 200 may also include a bias threshold field 216 storing a bias threshold value 218. The bias counter value 214 and the bias threshold value 218 may be used by the instruction processing circuit 102 to judge a relative likelihood of a memory instruction punt occurring as a result of out-of-order execution of an associated memory instruction. The instruction processing circuit 102 may then determine whether to preempt the memory instruction punt or to continue conventional processing of the memory instruction based on the bias counter value 214 and the bias threshold value 218. For example, the bias counter value 214 may be incremented upon each occurrence of a hazard associated with the memory instruction corresponding to the entry 202(0). If the memory instruction is again detected in the instruction stream, the instruction processing circuit 102 may prevent the memory instruction from taking effect before pending memory instructions older than the memory instruction only if the bias counter value 214 exceeds the bias threshold value 218. Some aspects may provide that, instead of being stored in the bias threshold field 216, the bias threshold value 218 may be stored in a location separate from the PAT 200, such as in one of the registers 124 of Figure 1, or may be hardcoded by the instruction processing circuit 102.

It is to be understood that some aspects may provide that the entries 202(0)-202(Y) of the PAT 200 may include other fields in addition to the fields 204, 208, 212, and 216 illustrated in Figure 2. It is to be further understood that the PAT 200 in some aspects may be implemented as a cache configured according to associativity and replacement policies known in the art. In the example of Figure 2, the PAT 200 is illustrated as a single data structure. However, in some aspects, the PAT 200 may also comprise more than one data structure or cache.

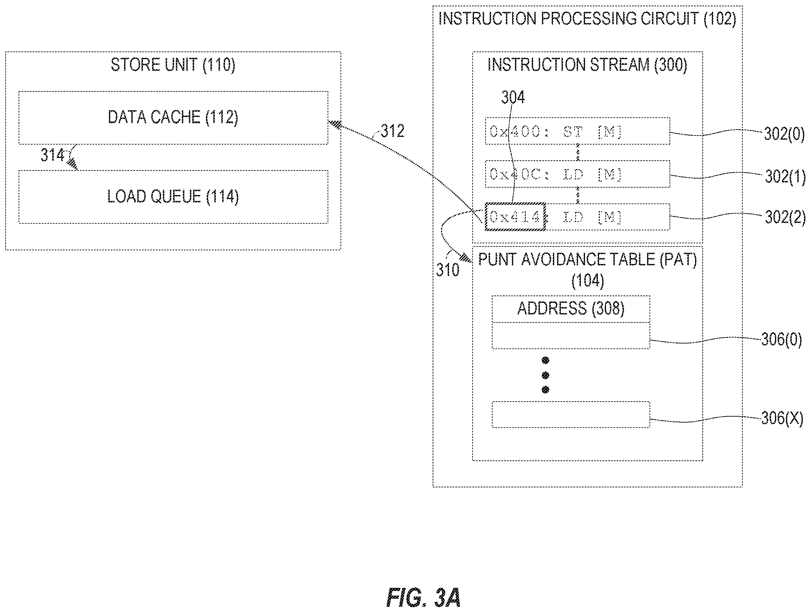

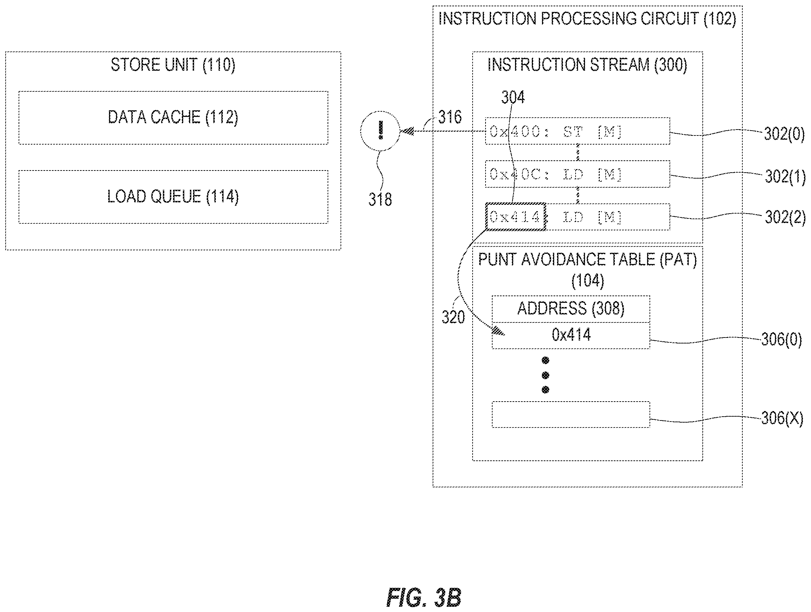

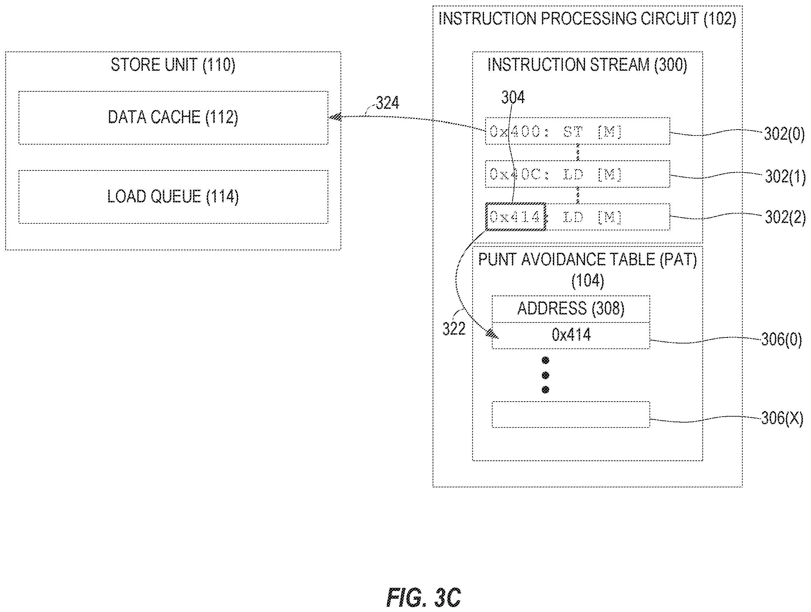

To better illustrate exemplary communications flows between the instruction processing circuit 102 and the load/store unit 110 of Figure 1, Figures 3A-3C are provided. Figure 3A illustrates exemplary communications flows for an out-of-order execution of a memory instruction, while Figure 3B shows exemplary communications flows for establishing an entry in the PAT 104. Figure 3C illustrates exemplary communications flows during prediction of a subsequent memory instruction punt.

As shown in Figures 3A-3C, the instruction processing circuit 102 processes an instruction stream 300 comprising three instructions: a memory store instruction (ST) 302(0) and two memory load instructions (LD) 302(1) and 302(2). The memory store instruction 302(0) and memory load instructions 302(1), 302(2) are also collectively referred to herein as "memory instructions 302(0)-302(2)." In this example, the memory store instruction 302(0) directs the OOO computer processor 100 to store a value in a memory location M (not shown), while the memory load instructions 302(1), 302(2) each directs the OOO computer processor 100 to read a value from the memory location M. In the example of Figures 3A-3C, the memory store instruction 302(0) is the oldest in terms of program order, while the memory load instruction 302(1) is the second-oldest and the memory load instruction 302(2) is the youngest. The memory load instruction 302(2) is associated with an address 304, which in this example is the hexadecimal value 0x414. It is to be understood that, in some aspects, the address 304 may be retrieved from, e.g., the program counter 128 of Figure 1.

The PAT 104 illustrated in Figures 3A-3C includes multiple entries 306(0)-306(X). To facilitate prediction of memory instruction punts, each entry 306(0)-306(X) of the PAT 104 includes an address field 308, which corresponds to the address field 204 of Figure 2. As discussed above, the address field 308 for each entry 306(0)-306(X) may be used to store the address 304 of the memory load instruction 302(2) that is detected by the instruction processing circuit 102. Although not shown in the example of Figure 3A, in some aspects the entries 306(0)-306(X) of the PAT 104 may also include fields corresponding to the hazard indicator field 208, the bias counter field 212, and/or the bias threshold field 216 of Figure 2.

Referring now to Figure 3A, in this example the instruction processing circuit 102 elects to execute the memory load instruction 302(2) out-of-order, before the older memory store instruction 302(0) and the older memory load instruction 302(1) have executed. As indicated by arrow 310, the instruction processing circuit 102 first checks the PAT 104 to determine whether the address 304 of the memory load instruction 302(2) (i.e., the hexadecimal value 0x414) may be found in any of the entries 306(0)-306(X). The instruction processing circuit 102 does not find the address 304 in the entries 306(0)-306(X), and thus, in response to the "miss," continues conventional processing of the memory load instruction 302(2). The memory load instruction 302(2) thus reads the data cache 112 and returns data stored at memory location M, as indicated by arrows 312 and 314.

In Figure 3B, the instruction processing circuit 102 next elects to execute the memory store instruction 302(0), as indicated by arrow 316. As noted above, the memory store instruction 302(0) is older than the memory load instruction 302(2), and stores a value in the same memory location M read by the memory load instruction 302(2). Accordingly, the attempt by the instruction processing circuit 102 to execute the memory store instruction 302(0) results in detection of a hazard 318 (in this case, a RAW hazard). In response to detecting the hazard 318, the instruction processing circuit 102 generates the entry 306(0) in the PAT 104, and stores the address 304 of the memory load instruction 302(2) in the address field 308 of the entry 306(0), as indicated by arrow 320. The instruction processing circuit 102 then causes the memory store instruction 302(0) and the memory load instruction 302(2) to be re-fetched and re-executed (not shown), resulting in a memory instruction punt.

Turning to Figure 3C, upon re-fetching the memory store instruction 302(0) and the memory load instruction 302(2), the instruction processing circuit 102 again elects to execute the memory load instruction 302(2) out-of-order, before the older memory store instruction 302(0) and memory load instruction 302(1) have executed. As indicated by arrow 322, the instruction processing circuit 102 checks the PAT 104 to determine whether the address 304 of the memory load instruction 302(2) is found in any of the entries 306(0)-306(X), and this time locates the entry 306(0). In response, the instruction processing circuit 102 prevents the memory load instruction 302(2) from taking effect before one or more of the pending memory instructions 302(0)-302(1) that are older than the memory load instruction 302(2). In this example, for purposes of clarity, the PAT 104 does not include an optional hazard indicator field, and thus it is assumed that the PAT 104 is associated with tracking RAW hazards only. The instruction processing circuit 102 thus prevents the memory load instruction 302(2) from taking effect before the pending memory store instruction 302(0). As seen in Figure 3C, the instruction processing circuit 102 prevents the memory load instruction 302(2) from taking effect before the pending memory store instruction 302(0) by performing an in-order dispatch of the memory store instruction 302(0) prior to the memory load instruction 302(2), as indicated by arrow 324. Some aspects may provide that the instruction processing circuit 102 may prevent the memory load instruction 302(2) from taking effect before the pending memory store instruction 302(0) by preventing an early return of data by the memory load instruction 302(2).

It is to be understood that, in some aspects in which the hazard 318 is a RAR hazard, the instruction processing circuit 102 may prevent the memory load instruction 302(2) from taking effect before the pending memory load instruction 302(1). According to aspects in which the hazard 318 is a resource constraint hazard, the instruction processing circuit 102 may prevent the memory load instruction 302(2) from taking effect before any of the pending memory instructions 302(0)-302(1) older than the memory load instruction 302(2). Some aspects may provide that the type of hazard 318 may be determined based on a hazard indicator such as the hazard indicator 210 of Figure 2. In some aspects, the instruction processing circuit 102 may determine whether to prevent the memory load instruction 302(2) from taking effect before the pending memory instructions 302(0)-302(1) based on a bias counter value, such as comparing the bias counter value 214 and the bias threshold 216 of Figure 2.

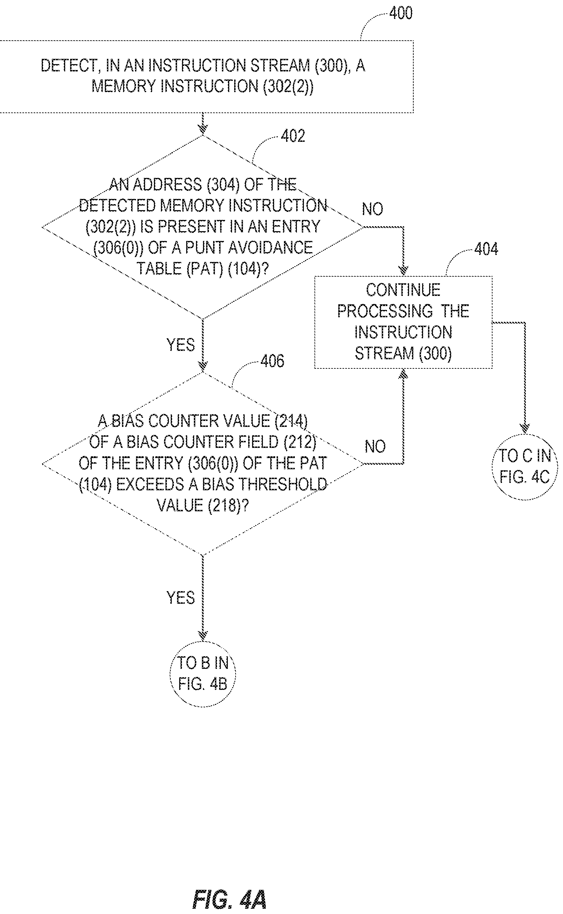

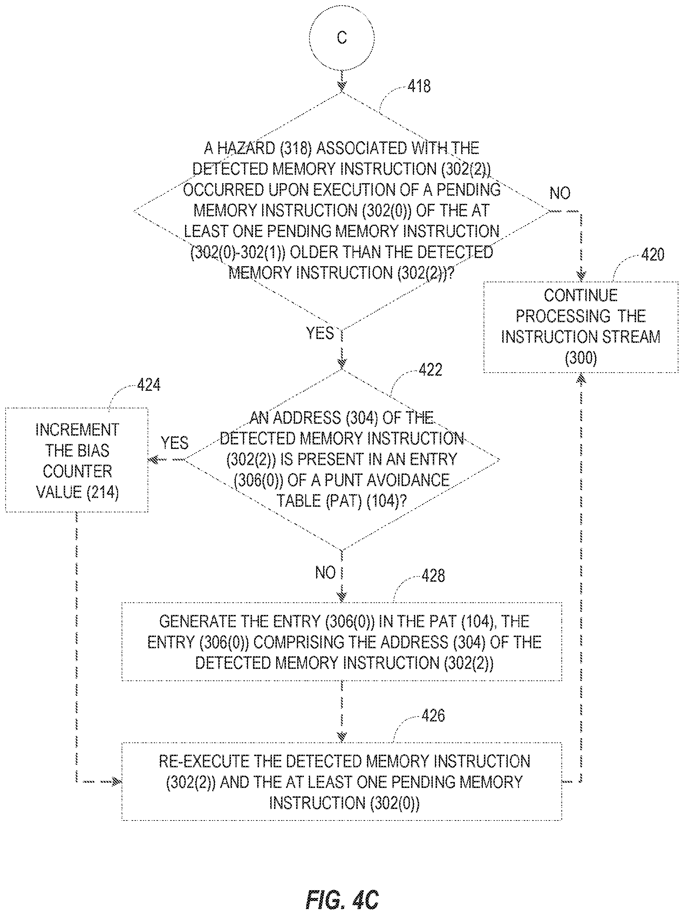

To illustrate exemplary operations for predicting memory instruction punts using the PAT 104 of Figure 1, Figures 4A-4C are provided. For the sake of clarity, elements of Figures 1, 2, and 3A-3C are referenced in describing Figures 4A-4C. Operations in Figure 4A begin with the instruction processing circuit 102 of Figure 1 detecting, in an instruction stream 300, a memory instruction such as the memory load instruction 302(2) (block 400). The instruction processing circuit 102 next determines whether an address 304 of the detected memory instruction 302(2) is present in an entry 306(0) of a PAT 104 (block 402). If not, the memory instruction 302(2) is not associated with a previous memory instruction punt, and thus the instruction processing circuit 102 continues processing the instruction stream 300 (block 404). Processing then resumes at block 418 of Figure 4C.

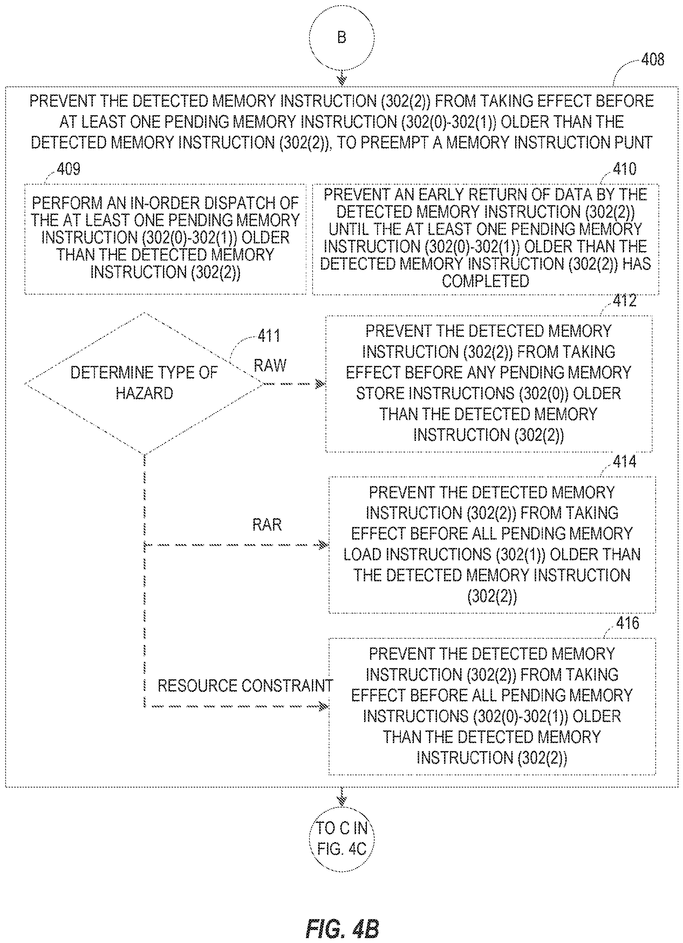

If, at decision block 402, the address 304 of the detected memory instruction 302(2) is determined to be present, the instruction processing circuit 102 in some aspects may further determine whether the bias counter value 214 of a bias counter field 212 of the entry 306(0) of the PAT 104 exceeds a bias threshold value 218 (block 406). If not, the instruction processing circuit 102 may conclude that the likelihood of a memory instruction punt is relatively low. In that case, the instruction processing circuit 102 continues conventional processing of the instruction stream 300 (block 404). If the instruction processing circuit 102 does not utilize the optional bias counter value 214, or if the instruction processing circuit 102 determines at optional decision block 406 that the bias counter value 214 exceeds the bias threshold value 218, processing resumes at block 408 of Figure 4B.

Referring now to Figure 4B, the instruction processing circuit 102 prevents the detected memory instruction 302(2) from taking effect before at least one pending memory instruction 302(0)-302(1) older than the detected memory instruction 302(2), to preempt a memory instruction punt (block 408). In some aspects, operations of block 408 for preventing the detected memory instruction 302(2) from taking effect before the at least one pending memory instruction 302(0)-302(1) may comprise performing an in-order dispatch of the at least one pending memory instruction 302(0)-302(1) older than the detected memory instruction 302(2) (block 409). Some aspects may provide that operations of block 408 for preventing the detected memory instruction 302(2) from taking effect before the at least one pending memory instruction 302(0)-302(1) may comprise preventing an early return of data by the detected memory instruction 302(2) until the at least one pending memory instruction 302(0)-302(1) older than the detected memory instruction 302(2) has completed (block 410).

In some aspects, operations of block 408 for preventing the detected memory instruction 302(2) from taking effect before the at least one pending memory instruction 302(0)-302(1) may be accomplished by the instruction processing circuit 102 first determining a type of hazard associated with the entry 306(0) of the PAT 104 (block 411). Some aspects may provide that the type of hazard may be ascertained using a hazard indicator such as the hazard indicator 210 of Figure 2. According to some aspects, multiple PATs 104 may be provided, each associated with a specific hazard type.

If the entry 306(0) of the PAT 104 is determined at decision block 411 to be associated with a RAW hazard, the instruction processing circuit 102 may prevent the detected memory instruction 302(2) from taking effect before any pending memory store instructions 302(0) older than the detected memory instruction 302(2) (block 412). If it is determined at decision block 411 that the entry 306(0) of the PAT 104 is associated with a RAR hazard, the instruction processing circuit 102 may prevent the detected memory instruction 302(2) from taking effect before all pending memory load instructions 302(1) older than the detected memory instruction 302(2) (block 414). If the entry 306(0) of the PAT 104 is associated with a resource constraint hazard, the instruction processing circuit 102 may prevent the detected memory instruction 302(2) from taking effect before all pending memory instructions 302(0)-302(1) older than the detected memory instruction 302(2) (block 416). Processing then resumes at block 418 of Figure 4C.

In Figure 4C, the instruction processing circuit 102 in some aspects may further determine whether a hazard 318 associated with the detected memory instruction 302(2) occurred upon execution of a pending memory instruction 302(0) of the at least one pending memory instruction 302(0)-302(1) older than the detected memory instruction 302(2) (block 418). If not, the instruction processing circuit 102 continues processing the instruction stream 300 (block 420). However, if it is determined at decision block 418 that a hazard 318 occurred, the instruction processing circuit 102, according to some aspects in which the optional bias counter value 214 is employed, may determine whether the address 304 of the detected memory instruction 302(2) is present in an entry 306(0) of the PAT 104 (block 422). If so, the instruction processing circuit 102 may increment the bias counter value 214 (block 424). The instruction processing 102 then re-executes the detected memory instruction 302(2) and the at least one pending memory instruction 302(0) (block 426).

If the instruction processing circuit 102 determines at decision block 422 that the address 304 is not present, or if the instruction processing circuit 102 does not use the optional bias counter value 214, the instruction processing circuit 102 may generate the entry 306(0) in the PAT 104, the entry 306(0) comprising the address 304 of the detected memory instruction 302(2) (block 428). The instruction processing circuit 102 next re-executes the detected memory instruction 302(2) and the at least one pending memory instruction 302(0) (block 426). The instruction processing circuit 102 then continues processing the instruction stream 300 (block 420).

Predicting memory instruction punts using a PAT according to aspects disclosed herein may be provided in or integrated into any processor-based device. Examples, without limitation, include a set top box, an entertainment unit, a navigation device, a communications device, a fixed location data unit, a mobile location data unit, a mobile phone, a cellular phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

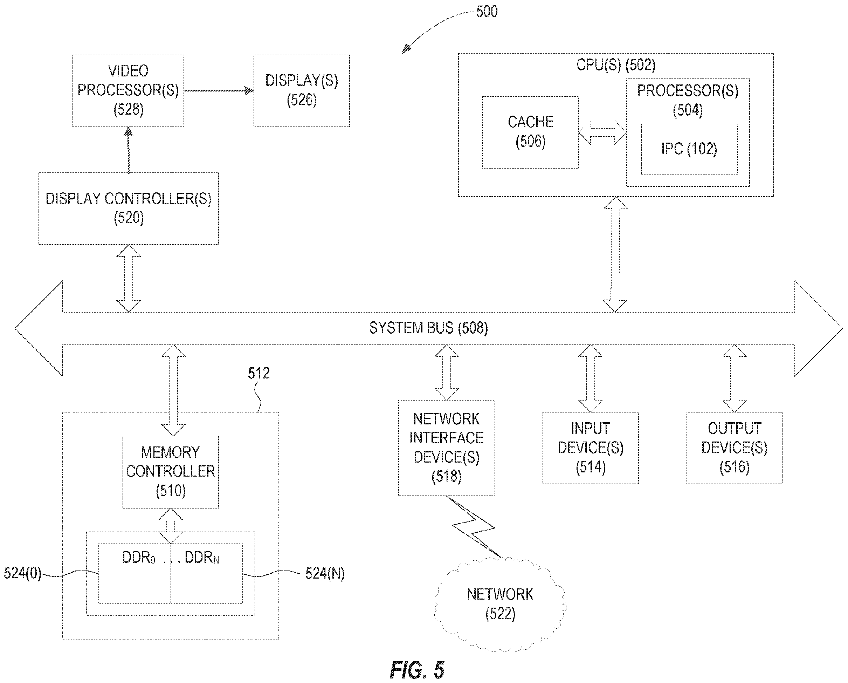

In this regard, Figure 5 illustrates an example of a processor-based system 500 that can employ the instruction processing circuit 102 illustrated in Figure 1. In this example, the processor-based system 500 includes one or more central processing units (CPUs) 502, each including one or more processors 504. The one or more processors 504 may include the instruction processing circuit (IPC) 102 of Figure 1, and may perform the operations illustrated in Figures 4A-4C. The CPU(s) 502 may be a master device. The CPU(s) 502 may have cache memory 506 coupled to the processor(s) 504 for rapid access to temporarily stored data. The CPU(s) 502 is coupled to a system bus 508 and can intercouple master and slave devices included in the processor-based system 500. As is well known, the CPU(s) 502 communicates with these other devices by exchanging address, control, and data information over the system bus 508. For example, the CPU(s) 502 can communicate bus transaction requests to a memory controller 510 as an example of a slave device.

Other master and slave devices can be connected to the system bus 508. As illustrated in Figure 5, these devices can include a memory system 512, one or more input devices 514, one or more output devices 516, one or more network interface devices 518, and one or more display controllers 520, as examples. The input device(s) 514 can include any type of input device, including but not limited to input keys, switches, voice processors, etc. The output device(s) 516 can include any type of output device, including but not limited to audio, video, other visual indicators, etc. The network interface device(s) 518 can be any devices configured to allow exchange of data to and from a network 522. The network 522 can be any type of network, including but not limited to a wired or wireless network, a private or public network, a local area network (LAN), a wide local area network (WLAN), and the Internet. The network interface device(s) 518 can be configured to support any type of communications protocol desired. The memory system 512 can include one or more memory units 524(0-N).

The CPU(s) 502 may also be configured to access the display controller(s) 520 over the system bus 508 to control information sent to one or more displays 526. The display controller(s) 520 sends information to the display(s) 526 to be displayed via one or more video processors 528, which process the information to be displayed into a format suitable for the display(s) 526. The display(s) 526 can include any type of display, including but not limited to a cathode ray tube (CRT), a liquid crystal display (LCD), a plasma display, etc.

Those of skill in the art will further appreciate that the various illustrative logical blocks, modules, circuits, and algorithms described in connection with the aspects disclosed herein may be implemented as electronic hardware, instructions stored in memory or in another computer-readable medium and executed by a processor or other processing device, or combinations of both. The master and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The aspects disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flow chart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein, but is to be accorded the widest scope consistent with the principles and novel features disclosed herein.

## Claims

1. An instruction processing circuit in an out-of-order (OOO) computer processor;
the instruction processing circuit communicatively coupled to a front-end circuit of an execution pipeline, and comprising a punt avoidance table (PAT) providing a plurality of entries; and
the instruction processing circuit configured to prevent a detected memory instruction from taking effect before at least one pending memory instruction older than the detected memory instruction to preempt a memory instruction punt, responsive to determining that an address of the detected memory instruction is present in an entry of the plurality of entries of the PAT, by being configured to:
determine a hazard type with which the entry of the PAT is associated;
responsive to determining that the entry of the PAT is associated with a read-after-write (RAW) hazard, prevent the detected memory instruction from taking effect before any pending memory store instructions older than the detected memory instruction;
responsive to determining that the entry of the PAT is associated with a read-after-read (RAR) hazard, prevent the detected memory instruction from taking effect before any pending memory load instructions older than the detected memory instruction; and
responsive to determining that the entry of the PAT is associated with a resource constraint hazard, prevent the detected memory instruction from taking effect before any pending memory instructions older than the detected memory instruction.

2. The instruction processing circuit of claim 1, wherein the instruction processing circuit is configured to prevent the detected memory instruction from taking effect before the at least one pending memory instruction older than the detected memory instruction by being configured to perform an in-order dispatch of the at least one pending memory instruction older than the detected memory instruction.

3. The instruction processing circuit of claim 1, wherein the instruction processing circuit is configured to prevent the detected memory instruction from taking effect before the at least one pending memory instruction older than the detected memory instruction by being configured to prevent an early return of data by the detected memory instruction until the at least one pending memory instruction older than the detected memory instruction has completed.

4. The instruction processing circuit of claim 1, further configured to determine the hazard type based on a hazard indicator of the entry of the PAT.

5. The instruction processing circuit of claim 1, further configured to:
determine, upon execution of a pending memory instruction of the at least one pending memory instruction older than the detected memory instruction, whether a hazard associated with the detected memory instruction has occurred; and
responsive to determining that the hazard associated with the detected memory instruction has occurred:
generate the entry in the PAT, the entry comprising the address of the detected memory instruction; and
re-execute the detected memory instruction and the at least one pending memory instruction.

6. The instruction processing circuit of claim 5, further configured to:
prior to generating the entry in the PAT:
determine whether the address of the detected memory instruction is present in an entry of the PAT; and
responsive to determining that the address of the detected memory instruction is present in the entry, increment a bias counter value of a bias counter field of the entry; and
prior to preventing the detected memory instruction from taking effect before the at least one pending memory instruction older than the detected memory instruction, determine whether the bias counter value of the bias counter field of the entry of the PAT exceeds a bias threshold value;
wherein the instruction processing circuit is configured to:
generate the entry in the PAT responsive to determining that the address of the detected memory instruction is not present in the entry of the PAT; and
prevent the detected memory instruction from taking effect before the at least one pending memory instruction older than the detected memory instruction responsive to determining that the bias counter value exceeds the bias threshold value.

7. The instruction processing circuit of claim 1 integrated into an integrated circuit (IC).

8. The instruction processing circuit of claim 1 integrated into a device selected from the group consisting of: a set top box; an entertainment unit; a navigation device; a communications device; a fixed location data unit; a mobile location data unit; a mobile phone; a cellular phone; a computer; a portable computer; a desktop computer; a personal digital assistant (PDA); a monitor; a computer monitor; a television; a tuner; a radio; a satellite radio; a music player; a digital music player; a portable music player; a digital video player; a video player; a digital video disc (DVD) player; and a portable digital video player.

9. A method for predicting memory instruction punts, comprising:
detecting (400), in an instruction stream, a memory instruction;
determining (402) whether an address of the detected memory instruction is present in an entry of a punt avoidance table (PAT); and
responsive to determining that the address of the detected memory instruction is present in the entry, preventing (408) the detected memory instruction from taking effect before at least one pending memory instruction older than the detected memory instruction by:
determining (411) a hazard type with which the entry of the PAT is associated;
responsive to determining that the entry of the PAT is associated with a read-after-write (RAW) hazard, preventing (412) the detected memory instruction from taking effect before any pending memory store instructions older than the detected memory instruction;
responsive to determining that the entry of the PAT is associated with a read-after-read (RAR) hazard, preventing (414) the detected memory instruction from taking effect before any pending memory load instructions older than the detected memory instruction; and
responsive to determining that the entry of the PAT is associated with a resource constraint hazard, preventing (416) the detected memory instruction from taking effect before any pending memory instructions older than the detected memory instruction.

10. The method of claim 9, wherein preventing the detected memory instruction from taking effect before the at least one pending memory instruction older than the detected memory instruction comprises performing (409) an in-order dispatch of the at least one pending memory instruction older than the detected memory instruction.

11. The method of claim 9, wherein preventing the detected memory instruction from taking effect before the at least one pending memory instruction older than the detected memory instruction comprises preventing (410) an early return of data by the detected memory instruction until the at least one pending memory instruction older than the detected memory instruction has completed.

12. The method of claim 9, wherein preventing the detected memory instruction from taking effect before the at least one pending memory instruction older than the detected memory instruction is based on a hazard indicator of the entry of the PAT.

13. The method of claim 9, further comprising:
determining, upon dispatch of a pending memory instruction of the at least one pending memory instruction older than the detected memory instruction, whether a hazard associated with the detected memory instruction has occurred; and
responsive to determining that the hazard associated with the detected memory instruction has occurred:
generating (428) the entry in the PAT, the entry comprising the address of the detected memory instruction; and
re-executing (426) the detected memory instruction and the at least one pending memory instruction.

14. The method of claim 13, further comprising:
prior to generating the entry in the PAT:
determining (422) whether the address of the detected memory instruction is present in an entry of the PAT; and
responsive to determining that the address of the detected memory instruction is present in the entry, incrementing (424) a bias counter value of a bias counter field of the entry; and
prior to preventing the detected memory instruction from taking effect before the at least one pending memory instruction older than the detected memory instruction, determining (406) whether the bias counter value of the bias counter field of the entry of the PAT exceeds a bias threshold value;
wherein:
generating the entry in the PAT is responsive to determining that the address of the detected memory instruction is not present in the entry of the PAT; and
preventing (408) the detected memory instruction from taking effect before the at least one pending memory instruction older than the detected memory instruction is responsive to determining that the bias counter value exceeds the bias threshold value.

15. A non-transitory computer-readable medium having stored thereon computer executable instructions which, when executed by a processor, cause the processor to perform the method of any of claims 9 to 14.

## Patentansprüche

1. Eine Befehlsverarbeitungsschaltung in einem OOO-Computerprozessor (OOO = out-of-order);
wobei die Befehlsverarbeitungsschaltung kommunikativ an eine Frontend-Schaltung einer Ausführungs-Pipeline gekoppelt ist, und eine PAT (PAT = punt avoidance table bzw. Punt-Vermeidungstabelle) aufweist, die eine Vielzahl von Einträgen vorsieht; und
wobei die Befehlsverarbeitungsschaltung konfiguriert ist zum Verhindern, dass ein detektierter Speicherbefehl vor wenigstens einem ausstehenden Speicherbefehl in Kraft tritt, der älter als der detektierte Speicherbefehl ist, um einem Speicherbefehl-Punt zuvorzukommen, und zwar ansprechend auf Bestimmen, dass eine Adresse des detektierten Speicherbefehls in einem Eintrag der Vielzahl von Einträgen der PAT vorliegt, indem sie konfiguriert ist zum:
Bestimmen eines Risikotyps, mit dem der Eintrag der PAT assoziiert ist;
ansprechend auf Bestimmen, dass der Eintrag der PAT mit einem RAW-Risiko (RAW = read-after-write bzw. Lesen nach Schreiben) assoziiert ist, Verhindern, dass der detektierte Speicherbefehl vor irgendwelchen ausstehenden Speicherspeicherungsbefehlen in Kraft tritt, die älter sind als der detektierte Speicherbefehl;
ansprechend auf Bestimmen, dass der Eintrag der PAT mit einem RAR-Risiko (RAR = read-after-read bzw. Lesen nach Lesen) assoziiert ist, Verhindern, dass der detektierte Speicherbefehl vor irgendwelchen ausstehenden Speicherladebefehlen in Kraft tritt, die älter sind als der detektierte Speicherbefehl; und
ansprechend auf Bestimmen, dass der Eintrag der PAT mit einem Ressourcenbeschränkungsrisiko assoziiert ist, Verhindern, dass der detektierte Speicherbefehl vor irgendwelchen ausstehenden Speicherbefehlen in Kraft tritt, die älter sind als der detektierte Speicherbefehl.

2. Befehlsverarbeitungsschaltung nach Anspruch 1, wobei die Befehlsverarbeitungsschaltung konfiguriert ist zum Verhindern, dass der detektierte Speicherbefehl vor dem wenigstens einen ausstehenden Speicherbefehl in Kraft tritt, der älter ist als der detektierte Speicherbefehl, indem sie konfiguriert ist zum Durchführen einer Abfertigung in Reihenfolge von dem wenigstens einen ausstehenden Speicherbefehl, der älter ist als der detektierte Speicherbefehl.

3. Befehlsverarbeitungsschaltung nach Anspruch 1, wobei die Befehlsverarbeitungsschaltung konfiguriert ist zum Verhindern, dass der detektierte Speicherbefehl vor dem wenigstens einen ausstehenden Speicherbefehl, der älter ist als der detektierte Speicherbefehl, in Kraft tritt, indem sie konfiguriert ist zum Verhindern einer frühen Ausgabe von Daten durch den detektierten Speicherbefehl, bis der wenigstens eine ausstehende Speicherbefehl, der älter ist als der detektierte Speicherbefehl, abgeschlossen worden ist.

4. Befehlsverarbeitungsschaltung nach Anspruch 1, die weiter konfiguriert ist zum Bestimmen des Risikotyps basierend auf einem Risikoindikator des Eintrags der PAT.

5. Befehlsverarbeitungsschaltung nach Anspruch 1, die weiter konfiguriert ist zum:
Bestimmen, auf eine Ausführung eines ausstehenden Speicherbefehls des wenigstens einen ausstehenden Speicherbefehls hin, der älter ist als der detektierte Speicherbefehl, ob ein Risiko, das mit dem detektierten Speicherbefehl assoziiert ist, eingetreten ist; und
ansprechend auf Bestimmen, dass das Risiko, das mit dem detektierten Speicherbefehl assoziiert ist, eingetreten ist:
Generieren des Eintrags in der PAT, wobei der Eintrag die Adresse des detektierten Speicherbefehls aufweist; und
erneutes Ausführen des detektierten Speicherbefehls und des wenigstens einen ausstehenden Speicherbefehls.

6. Befehlsverarbeitungsschaltung nach Anspruch 5, die weiter konfiguriert ist zum:
vor Generieren des Eintrags in der PAT:
Bestimmen, ob die Adresse des detektierten Speicherbefehls in einem Eintrag der PAT vorliegt; und
ansprechend auf Bestimmen, dass die Adresse des detektierten Speicherbefehls in dem Eintrag vorliegt, Inkrementieren eines Bias-Zählerwertes eines Bias-Zählerfeldes des Eintrags; und
vor Verhindern, dass der detektierte Speicherbefehl vor dem wenigstens einen ausstehenden Speicherbefehl in Kraft tritt, der älter ist als der detektierte Speicherbefehl, Bestimmen, ob der Bias-Zählerwert des Bias-Zählerfeldes des Eintrages der PAT einen Bias-Schwellenwert überschreitet;
wobei die Befehlsverarbeitungsschaltung konfiguriert ist zum:
Generieren des Eintrags in der PAT ansprechend auf Bestimmen, dass die Adresse des detektierten Speicherbefehls in dem Eintrag der PAT nicht vorliegt; und
Verhindern, dass der detektierte Speicherbefehl vor dem wenigstens einen ausstehenden Speicherbefehl in Kraft tritt, der älter ist als der detektierte Speicherbefehl ansprechend auf Bestimmen, dass der Bias-Zählerwert den Bias-Schwellenwert überschreitet.

7. Befehlsverarbeitungsschaltung nach Anspruch 1, die in einen integrierten Schaltkreis bzw. IC (IC = integrated circuit) integriert ist.

8. Befehlsverarbeitungsschaltung nach Anspruch 1, die in eine Einrichtung integriert ist, die aus der Gruppe ausgewählt ist, die aus Folgendem besteht:
einer Set-Top-Box; eine Unterhaltungseinheit; einer Navigationseinheit; einer Kommunikationseinrichtung; einer Dateneinheit mit festem Standort; einer Dateneinheit mit mobilem Standort; einem Mobiltelefon; einem Zellentelefon;
einem Computer; einem tragbaren Computer; einem Desktop-Computer;
einem persönlichen digitalen Assistenten bzw. PDA; einem Monitor; einem Computermonitor; einem Fernseher; einem Tuner, einem Radio bzw. Funkgerät; einem Satellitenradio bzw. Satellitenfunkgerät; einer Musikabspielvorrichtung; einer digitalen Musikabspielvorrichtung; einer tragbaren Musikabspielvorrichtung; einer digitalen Videoabspielvorrichtung;
einer Videoabspielvorrichtung; einer DVD-Abspielvorrichtung (DVD = digital video disc); und einer tragbaren digitalen Videoabspielvorrichtung.

9. Ein Verfahren zum Vorhersagen von Speicherbefehls-Punts, das Folgendes aufweist:
Detektieren (400), in einem Befehlsstrom; eines Speicherbefehls;
Bestimmen (402), ob einen Adresse des detektierten Speicherbefehls in einem Eintrag einer PAT (PAT = punt avoidance table bzw Punt-Vermeidungstabelle) vorliegt; und
ansprechend auf Bestimmen, dass die Adresse des detektierten Speicherbefehls in dem Eintrag vorliegt, Verhindern (408), dass der detektierte Speicherbefehl in Kraft tritt vor wenigstens einem ausstehenden Speicherbefehl, der älter ist als der detektierte Speicherbefehl durch:
Bestimmen (411) eines Risikotyps, der mit dem Eintrag der PAT assoziiert ist;
ansprechend auf Bestimmen, dass der Eintrag der PAT mit einem RAW-Risiko (RAW = read-after-write bzw. Lesen nach Schreiben) assoziiert ist, Verhindern (412), dass der detektierte Speicherbefehl vor irgendwelchen ausstehenden Speicherspeicherungsbefehlen in Kraft tritt, die älter sind als der detektierte Speicherbefehl;
ansprechend auf Bestimmen, dass der Eintrag der PAT mit einem RAR-Risiko (RAR = read-after-read bzw. Lesen nach Lesen) assoziiert ist, Verhindern (414), dass der detektierte Speicherbefehl vor irgendwelchen ausstehenden Speicherladebefehlen in Kraft tritt, die älter sind als der detektierte Speicherbefehl; und
ansprechend auf Bestimmen, dass der Eintrag der PAT mit einem Ressourcenbeschränkungsrisiko assoziiert ist, Verhindern (416), dass der detektierte Speicherbefehl vor irgendwelchen ausstehenden Speicherbefehlen in Kraft tritt, die älter sind als der detektierte Speicherbefehl.

10. Verfahren nach Anspruch 9, wobei das Verhindern, dass der detektierte Speicherbefehl vor dem wenigstens einen ausstehenden Speicherbefehl in Kraft tritt, der älter als der detektierte Speicherbefehl ist, Durchführen (409) einer Abfertigung in Reihenfolge des wenigstens einen ausstehenden Speicherbefehls, der älter als der detektierte Speicherbefehl ist, aufweist.

11. Verfahren nach Anspruch 9, wobei das Verhindern, dass der detektierte Speicherbefehl vor dem wenigstens einen ausstehenden Speicherbefehl in Kraft tritt, der älter als der detektierte Speicherbefehl ist, Verhindern (410) einer frühen Ausgabe der Daten durch den detektierten Speicherbefehl, bis der wenigstens eine ausstehende Speicherbefehl, der älter als der detektierte Speicherbefehl ist, abgeschlossen worden ist, aufweist.

12. Verfahren nach Anspruch 9, wobei das Verhindern, dass der detektierte Speicherbefehl vor dem wenigstens einen ausstehenden Speicherbefehl in Kraft tritt, der älter als der detektierte Speicherbefehl ist, auf einem Risikoindikator des Eintrags der PAT basiert.

13. Verfahren nach Anspruch 9, das weiter Folgendes aufweist:
Bestimmen, auf eine Abfertigung eines ausstehenden Speicherbefehls des wenigstens einen ausstehenden Speicherbefehls hin, der älter ist als der detektierte Speicherbefehl, ob ein Risiko, das mit dem detektierten Speicherbefehl assoziiert ist, eingetreten ist; und
ansprechend auf Bestimmen, dass das Risiko, das mit dem detektierten Speicherbefehl assoziiert ist, eingetreten ist:
Generieren (428) des Eintrags in der PAT, wobei der Eintrag die Adresse des detektierten Speicherbefehls aufweist; und
erneutes Ausführen (426) des detektierten Speicherbefehls und des wenigstens einen ausstehenden Speicherbefehls.

14. Verfahren nach Anspruch 13, das weiter Folgendes aufweist:
vor dem Generieren des Eintrags in der PAT:
Bestimmen (422), ob die Adresse des detektierten Speicherbefehls in einem Eintrag der PAT vorliegt; und
ansprechend auf Bestimmen, dass die Adresse des detektierten Speicherbefehls in dem Eintrag vorliegt, Inkrementieren (424) eines Bias-Zählerwertes eines Bias-Zählerfeldes des Eintrags; und
vor dem Verhindern, dass der detektierte Speicherbefehl vor dem wenigstens einen ausstehenden Speicherbefehl in Kraft tritt, der älter ist als der dedizierte Speicherbefehl, Bestimmen (406), ob der Bias-Zählerwert des Bias-Zählerfeldes des Eintrags der PAT einen Bias-Schwellenwert überschreitet;
wobei
das Generieren des Eintrags in der PAT ansprechend ist auf Bestimmen, dass die Adresse des detektierten Speicherbefehls nicht in dem Eintrag der PAT vorliegt; und
das Verhindern (408), dass der detektierte Speicherbefehl vor dem wenigstens einen ausstehenden Speicherbefehl in Kraft tritt, der älter ist als der detektierte Speicherbefehl ansprechend ist auf Bestimmen, dass der Bias-Zählerwert den Bias-Schwellenwert überschreitet.

15. Ein nicht transitorisches computerlesbares Medium mit darauf gespeicherten, von einem Computer ausführbaren Instruktionen, die, wenn sie durch einen Prozessor ausgeführt werden, den Prozessor veranlassen zum Durchführen des Verfahrens nach einem der Ansprüche 9 bis 14.

## Revendications

1. Circuit de traitement d'instructions dans un processeur d'ordinateur pouvant traiter des instructions dans un ordre autre que celui prévu (OOO) ; dans lequel le circuit de traitement d'instructions est couplé en communication à un circuit frontal d'un pipeline d'exécution, et comprend une table permettant d'éviter le besoin de chercher et d'exécuter des instructions de nouveau « *punt avoidance* » (PAT) fournissant une pluralité d'entrées ; et le circuit de traitement d'instructions est configuré de manière à empêcher qu'une instruction de mémoire détectée ne prenne effet avant au moins une instruction de mémoire en attente antérieure à l'instruction de mémoire détectée pour préempter un besoin de chercher et d'exécuter des instructions de mémoire de nouveau, en réponse à une détermination selon laquelle une adresse de l'instruction de mémoire détectée est présente dans une entrée de la pluralité d'entrées de la table PAT, en ce qu'il est configuré de manière à :
déterminer un type de danger auquel l'entrée de la table PAT est associée ;
en réponse à une détermination selon laquelle l'entrée de la table PAT est associée à un danger de lecture après écriture (RAW), empêcher que l'instruction de mémoire détectée ne prenne effet avant des quelconques instructions de stockage de mémoire en attente antérieures à l'instruction de mémoire détectée ;
en réponse à une détermination selon laquelle l'entrée de la table PAT est associée à un danger de lecture après lecture (RAR), empêcher que l'instruction de mémoire détectée ne prenne effet avant des quelconques instructions de chargement de mémoire en attente antérieures à l'instruction de mémoire détectée ; et
en réponse à une détermination selon laquelle l'entrée de la table PAT est associée à un danger de contrainte de ressources, empêcher que l'instruction de mémoire détectée ne prenne effet avant des quelconques instructions de mémoire en attente antérieures à l'instruction de mémoire détectée.

2. Circuit de traitement d'instructions selon la revendication 1, dans lequel le circuit de traitement d'instructions est configuré de manière à empêcher que l'instruction de mémoire détectée ne prenne effet avant ladite au moins une instruction de mémoire en attente antérieure à l'instruction de mémoire détectée, en ce qu'il est configuré de manière à mettre en oeuvre une répartition dans l'ordre de ladite au moins une instruction de mémoire en attente antérieure à l'instruction de mémoire détectée.

3. Circuit de traitement d'instructions selon la revendication 1, dans lequel le circuit de traitement d'instructions est configuré de manière à empêcher que l'instruction de mémoire détectée ne prenne effet avant ladite au moins une instruction de mémoire en attente antérieure à l'instruction de mémoire détectée, en ce qu'il est configuré de manière à empêcher un retour anticipé de données par l'instruction de mémoire détectée jusqu'à ce que ladite au moins une instruction de mémoire en attente antérieure à l'instruction de mémoire détectée soit achevée.

4. Circuit de traitement d'instructions selon la revendication 1, configuré en outre de manière à déterminer le type de danger sur la base d'un indicateur de danger de l'entrée de la table PAT.

5. Circuit de traitement d'instructions selon la revendication 1, configuré en outre de manière à :
déterminer, suite à l'exécution d'une instruction de mémoire en attente de ladite au moins une instruction de mémoire en attente antérieure à l'instruction de mémoire détectée, si un danger associé à l'instruction de mémoire détectée a été rencontré ; et
en réponse à une détermination selon laquelle le danger associé à l'instruction de mémoire détectée a été rencontré :
générer l'entrée dans la table PAT, l'entrée comprenant l'adresse de l'instruction de mémoire détectée ; et
exécuter à nouveau l'instruction de mémoire détectée et ladite au moins une instruction de mémoire en attente.

6. Circuit de traitement d'instructions selon la revendication 5, en outre configuré de manière à :
avant de générer l'entrée dans la table PAT :
déterminer si l'adresse de l'instruction de mémoire détectée est présente dans une entrée de la table PAT ; et
en réponse à une détermination selon laquelle l'adresse de l'instruction de mémoire détectée est présente dans l'entrée, incrémenter une valeur de compteur de probabilité relative d'un champ de compteur de probabilité relative de l'entrée ; et
avant d'empêcher que l'instruction de mémoire détectée ne prenne effet avant ladite au moins une instruction de mémoire en attente antérieure à l'instruction de mémoire détectée, déterminer si la valeur de compteur de probabilité relative « *bias* » du champ de compteur de probabilité relative de l'entrée de la table PAT dépasse une valeur de seuil de probabilité relative ;
dans lequel le circuit de traitement d'instructions est configuré de manière à :
générer l'entrée dans la table PAT en réponse à une détermination selon laquelle l'adresse de l'instruction de mémoire détectée n'est pas présente dans l'entrée de la table PAT ; et
empêcher que l'instruction de mémoire détectée ne prenne effet avant ladite au moins une instruction de mémoire en attente antérieure à l'instruction de mémoire détectée en réponse à une détermination selon laquelle la valeur de compteur de probabilité relative dépasse la valeur de seuil de probabilité relative.

7. Circuit de traitement d'instructions selon la revendication 1, lequel est intégré dans un circuit intégré (IC).

8. Circuit de traitement d'instructions selon la revendication 1, lequel est intégré dans un dispositif sélectionné à partir du groupe constitué par : un décodeur ; une unité de divertissement ; un dispositif de navigation ; un dispositif de communication ; une unité de données à emplacement fixe ; une unité de données à emplacement mobile ; un téléphone mobile ; un téléphone cellulaire ; un ordinateur ; un ordinateur portable ; un ordinateur de bureau ; un assistant numérique personnel (PDA) ; un moniteur ; un moniteur d'ordinateur ; une télévision ; un syntoniseur ; une radio ; une radio satellite ; un lecteur musical ; un lecteur musical numérique ; un lecteur musical portatif ; un lecteur vidéo numérique ; un lecteur vidéo ; un lecteur de disque vidéonumérique (DVD) ; et un lecteur vidéo numérique portatif.

9. Procédé de prédiction du besoin de chercher et d'exécuter des instructions de mémoire de nouveau, comprenant les étapes ci-dessous consistant à :
détecter (400), dans un flux d'instructions, une instruction de mémoire ;
déterminer (402) si une adresse de l'instruction de mémoire détectée est présente dans une entrée d'une table permettant d'éviter le besoin de chercher et d'exécuter des instructions de nouveau (PAT) ; et
en réponse à une détermination selon laquelle l'adresse de l'instruction de mémoire détectée est présente dans l'entrée, empêcher (408) que l'instruction de mémoire détectée ne prenne effet avant au moins une instruction de mémoire en attente antérieure à l'instruction de mémoire détectée, en mettant en oeuvre les étapes ci-dessous consistant à :
déterminer (411) un type de danger auquel l'entrée de la table PAT est associée ;
en réponse à une détermination selon laquelle l'entrée de la table PAT est associée à un danger de lecture après écriture (RAW), empêcher (412) que l'instruction de mémoire détectée ne prenne effet avant des quelconques instructions de stockage de mémoire en attente antérieures à l'instruction de mémoire détectée ;
en réponse à une détermination selon laquelle l'entrée de la table PAT est associée à un danger de lecture après lecture (RAR), empêcher (414) que l'instruction de mémoire détectée ne prenne effet avant des quelconques instructions de chargement de mémoire en attente antérieures à l'instruction de mémoire détectée ; et
en réponse à une détermination selon laquelle l'entrée de la table PAT est associée à un danger de contrainte de ressources, empêcher (416) que l'instruction de mémoire détectée ne prenne effet avant des quelconques instructions de mémoire en attente antérieures à l'instruction de mémoire détectée.

10. Procédé selon la revendication 9, dans lequel l'étape consistant à empêcher que l'instruction de mémoire détectée ne prenne effet avant ladite au moins une instruction de mémoire en attente antérieure à l'instruction de mémoire détectée comprend l'étape consistant à mettre en oeuvre (409) une répartition dans l'ordre de ladite au moins une instruction de mémoire en attente antérieure à l'instruction de mémoire détectée.

11. Procédé selon la revendication 9, dans lequel l'étape consistant à empêcher que l'instruction de mémoire détectée ne prenne effet avant ladite au moins une instruction de mémoire en attente antérieure à l'instruction de mémoire détectée comprend l'étape consistant à empêcher (410) un retour anticipé de données par l'instruction de mémoire détectée jusqu'à ce que ladite au moins une instruction de mémoire en attente antérieure à l'instruction de mémoire détectée soit achevée.

12. Procédé selon la revendication 9, dans lequel l'étape consistant à empêcher que l'instruction de mémoire détectée ne prenne effet avant ladite au moins une instruction de mémoire en attente antérieure à l'instruction de mémoire détectée est basée sur un indicateur de danger de l'entrée de la table PAT.

13. Procédé selon la revendication 9, comprenant en outre les étapes ci-dessous consistant à :
déterminer, suite à la répartition d'une instruction de mémoire en attente de ladite au moins une instruction de mémoire en attente antérieure à l'instruction de mémoire détectée, si un danger associé à l'instruction de mémoire détectée a été rencontré ; et
en réponse à une détermination selon laquelle le danger associé à l'instruction de mémoire détectée a été rencontré :
générer (428) l'entrée dans la table PAT, l'entrée comprenant l'adresse de l'instruction de mémoire détectée ; et
exécuter à nouveau (426) l'instruction de mémoire détectée et ladite au moins une instruction de mémoire en attente.

14. Procédé selon la revendication 13, comprenant en outre les étapes ci-dessous consistant à :
avant de générer l'entrée dans la table PAT :
déterminer (422) si l'adresse de l'instruction de mémoire détectée est présente dans une entrée de la table PAT ; et
en réponse à une détermination selon laquelle l'adresse de l'instruction de mémoire détectée est présente dans l'entrée, incrémenter (424) une valeur de compteur de probabilité relative d'un champ de compteur de probabilité relative de l'entrée ; et
avant d'empêcher que l'instruction de mémoire détectée ne prenne effet avant ladite au moins une instruction de mémoire en attente antérieure à l'instruction de mémoire détectée, déterminer (406) si la valeur de compteur de probabilité relative du champ de compteur de probabilité relative de l'entrée de la table PAT dépasse une valeur de seuil de probabilité relative ;
dans lequel :
l'étape consistant à générer l'entrée dans la table PAT est mise en oeuvre en réponse à une détermination selon laquelle l'adresse de l'instruction de mémoire détectée n'est pas présente dans l'entrée de la table PAT ; et
l'étape consistant à empêcher (408) que l'instruction de mémoire détectée ne prenne effet avant ladite au moins une instruction de mémoire en attente antérieure à l'instruction de mémoire détectée est mise en oeuvre en réponse à une détermination selon laquelle la valeur de compteur de probabilité relative dépasse la valeur de seuil de probabilité relative.

15. Support non transitoire lisible par ordinateur sur lequel sont stockées des instructions exécutables par ordinateur qui, lorsqu'elles sont exécutées par un processeur, amènent le processeur à mettre en oeuvre le procédé selon l'une quelconque des revendications 9 à 14.
